# EUROPÄISCHE PATENTANMELDUNG

(11) **EP 3 217 021 A1**
(43) Veröffentlichungstag der Anmeldung: **13.09.2017**
(21) Anmeldenummer: 17155100.5
(22) Anmeldetag: 08.02.2017
(51) Int. Cl.: F15B 15/06, F16K 31/163, F16K 31/52

(54) **DREHANTRIEB UND GETRÄNKEABFÜLLANLAGE**

(30) Priorität: 09.03.2016 DE 102016203870
(71) Anmelder: Evoguard GmbH, 93149 Nittenau (DE)
(72) Erfinder: Justl, Johann, 93149 Nittenau (DE)
(74) Vertreter: Grünecker Patent- und Rechtsanwälte PartG mbB

(57) **Zusammenfassung**

In einem Drehantrieb (D) mit einem einen Kolben (10) enthaltenden, einen Deckel (1) und einen Boden (3) aufweisenden Gehäuse (4), schraubengangähnlichen Führungsnuten (9) im Kolben, einer um eine Achse (X) des Drehantriebs drehbaren Welle (6) mit einer Querachse (8), die in die Führungsnuten eingreift, und im Deckel und/oder Boden verankerten, in Führungen (15) im Kolben eingepassten achsparallelen Drehmomentstützen (12), weist jede Drehmomentstütze (12) einen zum Abstützen zu übertragender Drehmomente lastspezifisch gestalteten, annähernd rechteckigen Außenquerschnitt auf, der tangential zur Welle (6) längere Rechteckseiten (28) und in Richtungen in etwa zur Achse kürzere Rechteckseiten (29) hat.

## Beschreibung

Die Erfindung betrifft einen Drehantrieb gemäß Oberbegriff des Patentanspruchs 1 und eine Getränkeabfüllanlage gemäß Oberbegriff des Patentanspruchs 16.

Bei aus DE 19950582 C1 und DE 102010002621 A1 bekannten Drehantrieben dieser Art haben die Drehmomentstützen kreisförmigen Außenquerschnitt. Die Führungen sind zylindrische Blindbohrungen in der Kolbenschürze des als Topf-Kolben ausgebildeten Kolbens. Der Wirkabstand zwischen jeder Drehmomentstütze und der Achse des Drehantriebs ist bauartbedingt relativ kurz, weil die Blindbohrungen genug Abstand zum Außenumfang des Kolbens benötigen. Die Drehmomentstützen sind hohl oder massiv und bestehen aus Stahl und sind am Deckel und/oder Boden beispielsweise durch Schweißen verankert. Bei der Übertragung der Drehmomente von der Querachse über die Führungsnuten, den Kolben und die Drehmomentstützen in den Deckel und/oder Boden des Gehäuses treten hohe Reibungskräfte auf. Ferner ist das Biegewiderstandsmoment der runden Drehmomentstützen in Wirkrichtung der Drehmomente bzw. tangential zur Welle des Drehantriebs beschränkt. Auch die runden Verankerungsbereiche der Drehmomentstützen unterliegen exzessiven, lokalen Spannungen. Dies vermindert insgesamt die Präzision, resultiert in hohen Bauteilbelastungen und einem nur moderaten Wirkungsgrad.

Der Erfindung liegt die Aufgabe zugrunde, einen Drehantrieb der eingangs genannten Art, mit erhöhtem Wirkungsgrad u.a. zwischen der Führungsstange und der Führung sowie eine Getränkeabfüllanlage mit verbesserten Gebrauchseigenschaften zu schaffen.

Die gestellte Aufgabe wird mit den Merkmalen des Patentanspruchs 1 und des Patentanspruchs 16 gelöst.

Die lastspezifische Gestaltung der Drehmomentstütze, z.B. aus einem Stegprofil oder einer Stange, mit einem annähernd rechteckigen Außenquerschnitt, dessen längere Rechteckseiten im Wesentlichen tangential zur Welle sind, und dessen kürzere, parallele Rechteckseiten in etwa radial zur Achse verlaufen, resultiert in einem gesteigerten axialen oder Biegewiderstandsmoment der Drehmomentstütze. Außerdem lässt sich der radiale Wirk-Abstand zwischen dem flächigen Bereich, in welchem die kürzeren Rechteckseiten mit der Führung zusammenwirken, und der Achse des Drehantriebs steigern. Dies erhöht die Präzision, reduziert Bauteilbelastungen und erhöht den Wirkungsgrad. Auch die Verankerung der Drehmomentstützen im Boden und/oder Deckel oder Gehäuse wirkt aufgrund der lastspezifischen Gestaltung stabiler und überträgt Reaktionskräfte aus den zu übertragenden Drehmomenten besser. Dank der lastspezifisch gestalteten Drehmomentstütze reicht im Grunde eine Drehmomentstütze aus. Aus Sicherheitsgründen und wegen geringeren spezifischen Flächenpressungen können dennoch zwei oder mehr Drehmomentstützen vorgesehen sein. Die jeweilige Drehmomentstütze könnte auch nur oder zusätzlich an der Innenseite des Gehäuses verankert sein.

Zweckmäßig sind die längeren Rechteckseiten konvex gerundet, vorzugsweise mit einer Krümmung annähernd entsprechend der Außenumfangskrümmung des Kolbens. Die kürzeren Rechteckseiten können gerade und eben oder ebenfalls konvex gekrümmt sein. Dieser doppeltkonvexe, einem Rechteck ähnlicher Außenquerschnitt führt zu einem hohen Biegewiderstandsmoment.

Bei einer zweckmäßigen Ausführungsform ist die Führung eine axiale Nut mit U-förmigem Querschnitt im Außenumfang des Kolbens, die die Drehmomentstütze an drei Seiten umgreift. Die Flanken der Nut z.B. sind parallel zu den kürzeren parallelen geraden Rechteckseiten des Außenquerschnitts der Führungsstange. Die offene Nut ist herstellungstechnisch vorteilhaft und resultiert in einem optimal großen Wirkabstand der Drehmomentstütze relativ zur Achse des Drehantriebs. Damit soll jedoch nicht ausgeschlossen werden, die Führungen im Kolben nicht nach außen offen zu formen, sondern mit einem geschlossenen Kanal-Querschnitt, der den Außenquerschnitt der Führungsstange an allen vier Seiten umfasst.

Bei einer zweckmäßigen Ausführungsform ist zwischen dem Grund der Nut und der einen längeren Rechteckseite ein Zwischenabstand vorgesehen. Die Drehmomentübertragung ausschließlich den kurzen Rechteckseiten und den Flanken der Führung zugewiesen. Der Zwischenabstand vermeidet unzweckmäßige zusätzliche Reibungskräfte beim Verschieben des Kolbens.

Der Außenquerschnitt der Drehmomentstütze kann speziell in etwa elliptisch sein mit etwa tangential zur Welle liegender Ellipsen-Hauptachse. Bei konvexen kürzeren Rechteckseiten können auch die Flanken der Führung im Kolbenumfang entsprechend konkav hinterschnitten sein. Dies resultiert in guter Führung und reduzierter Flächenpressung zwischen der Drehmomentstütze und der Führung.

Die Drehmomentstütze kann massiv, zum Beispiel aus Stahl, gestaltet sein, oder hohl. Aufgrund des hohen Biegewiderstandsmoments kann z.B. die aus dem gleichen Stahlmaterial ausgebildet sein wie der Boden und/oder der Deckel.

Zweckmäßig bildet die jeweilige Drehmomentstütze mit dem Deckel und /oder Boden und/oder Gehäuse einen fertigungstechnisch günstigen einstückigen Gußteil, z.B. einen Feinguss-Edelstahlteil.

In einer alternativen Ausführungsform ist die Drehmomentstütze am Boden und/oder Deckel oder innen im Gehäuse verschweißt. Vorzugsweise weist hier die Drehmomentstütze einen Fußteil auf, der gegenüber dem Außenquerschnitt in Richtung der längeren Rechteckseiten verbreitert ist, und, vorzugsweise, vollumfänglich verschweißt wird. Diese Schweißung kann problemlos automatisiert durchgeführt werden.

Günstig ist ferner, wenn sich die Drehstange mit einem freien Ende über die Axialposition der Querachse hinweg in den Kolben erstreckt, so dass eine optimal lange Führungslänge der Führungsstange in der Führung sichergestellt wird.

Bei einer Ausführungsform sind beispielsweise die längeren Rechteckseiten etwa doppelt so lang wie die kürzeren Rechteckseiten des Außenquerschnitts.

Schließlich ist es zweckmäßig und kostengünstig, den Kolben als Kunststoff-Formteil auszubilden, beispielsweise als Spritzgussteil. Gut geeignet für den Kolben ist Hochdruck-Polyamid oder POM mit Faserverstärkung.

Günstig sind die gegenüber der Drehmomentstütze in Umfangsrichtung versetzt angeordneten Laufbuchsen auf der Querachse bombiert und die Laufbahnen der Führungsnuten hinterschnitten. Dies ist in zweifacher Hinsicht vorteilhaft, weil die Bombierung und der Hinterschnitt die Kontaktflächen vergrößern und damit die Flächenpressung vermindern lassen, mit der die Drehmomente auf den Kolben übertragen werden, und die Montage des Drehantriebs vereinfacht wird, weil zur axialen Positionierung der Laufbuchsen auf der Querachse keine zusätzlichen Sicherungselemente erforderlich sind, sondern die Positionierung durch den Formschluss zwischen der Bombierung und dem Hinterschnitt bewirkt wird.

Eine Ausführungsform des Erfindungsgegenstands wird anhand der Zeichnung erläutert. Es zeigen:
- Fig. 1: eine Perspektivansicht eines an einem Scheibenventil z.B. in einer Getränkeabfüllanlage verbauten Drehantriebs,
- Fig. 2: einen Längsschnitt des Drehantriebs,
- Fig. 3: eine Seitenansicht des Drehantriebs,
- Fig. 4: eine Schnittdarstellung in der Schnittebene IV-IV in Fig. 3,
- Fig. 5: einen Teilschnitt ähnlich Fig. 4, und
- Fig. 6: eine Seitenansicht zu Fig. 5.

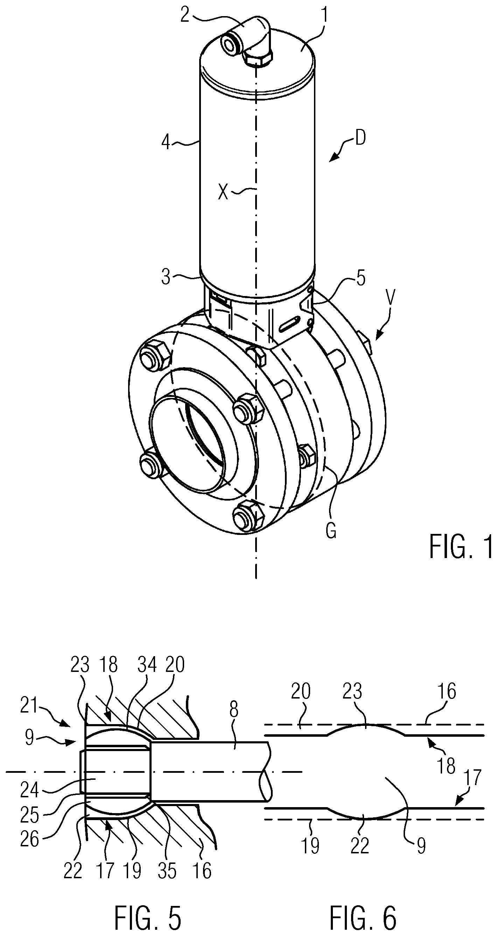

Fig. 1 verdeutlicht als nicht beschränkendes Beispiel ein Scheibenventil V, z.B. in einer Getränkeabfüllanlage, mit einem nicht gezeigten Schließorgan, welches durch einen Drehantrieb D um eine Achse X über einen Schwenkwinkel von beispielsweise etwa 90° zwischen einer Offen- und einer Schließstellung verstellbar ist.

Der Drehantrieb D ist mit einem Fußteil 5 auf dem Scheibenventil V montiert und weist einen Deckel 1, ein zylindrisches Gehäuse 4 und einen Boden 3 auf. Der Drehantrieb D wird in der Getränkeabfüllanlage beispielsweise pneumatisch über einen Anschluss 2 im Deckel 1 gegen eine Fig. 1 nicht gezeigte Feder gesteuert.

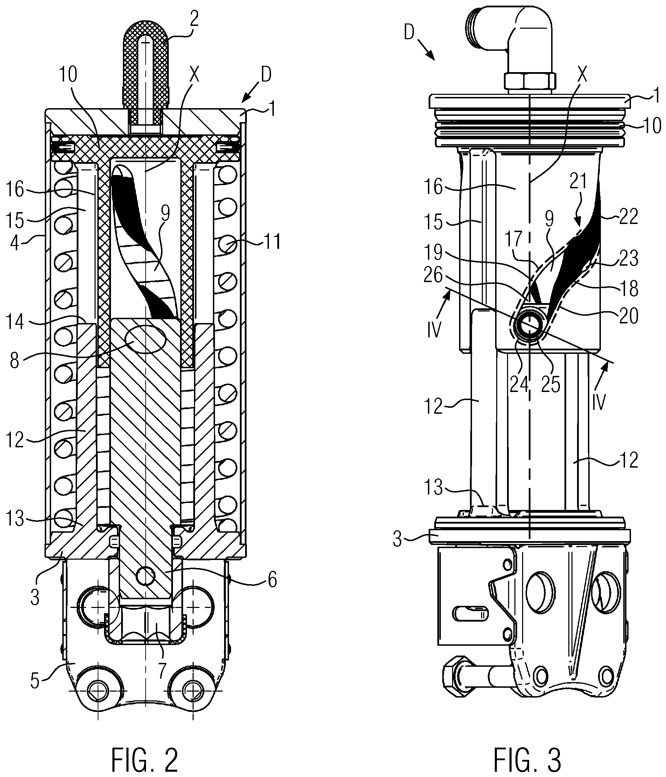

In der Längsschnittansicht in Fig. 2 ist hervorgehoben, dass im Boden 3 eine Welle 6 um die Achse X drehbar angeordnet ist, die sich nach oben in den Drehantrieb D erstreckt, und am unteren Ende einen Kupplungsteil 7 zum Verbinden mit dem Schließglied des Scheibenventils V aufweist.

Im oberen Ende der Welle 6 ist eine zur Achse X senkrechte Querachse 8 festgelegt, die mit ihren Enden 24 (Fig. 3) in diametral gegenüberliegende, schraubengangähnliche Führungsnuten 9 in einer Schürze 16 eines hier als Topf-Kolben ausgebildeten, linear geführten Kolbens 10 eingreift. Der Kolben 10 ist hier abgedichtet im Gehäuse 4 verschiebbar und wird durch eine Feder 11 beaufschlagt. Der Kolben 10 wird durch Druckmittel, beispielsweise Pressluft, über den Anschluss 2 gegen die Feder 11 beaufschlagt oder entlastet und so in Richtung der Achse X hin und her verschoben, wobei die Querachse 8 in den Führungsnuten 9 auf die Welle 6 eine Drehbewegung aufbringt. Damit diese Drehbewegung erzeugbar ist, wird der Kolben 10 gegen Verdrehen im Gehäuse 4 abgestützt.

Die Abstützung des Kolbens 10 übernehmen in der gezeigten Ausführungsform zwei (oder mehr) Drehmomentstützen 12,die sich von Verankerungsstellen 13 am Boden 3 nach oben in Führungen 15 der Kolbenschürze 16 erstrecken und den Kolben 10 gegen Verdrehen abstützen bzw. die aus der Bewegung der Querachse 8 in den Führungsnuten 9 entstehenden Drehmomente in den Boden 3 einleiten, der über den Fußteil 5 stationär mit dem Scheibenventil V verbunden ist. Freie Enden 14 der Führungsstangen 12 erstrecken sich nach oben z.B. bis über die Position der Querachse 8. Alternativ könnte eine Drehmomentstütze 12 am Boden 3 und die andere Drehmomentstütze 12 am Deckel 1 verankert sein, wobei sich dann die freien Enden 14 der Drehmomentstütze 12 an der Höhenposition der Querachse 8 überlappen können. In einer weiteren Alternative könnten die Drehmomentstützen nur im Deckel 1 verankert sein, oder könnten mehr als zwei achsparallele Drehmomentstützen 12 und Führungen 15 vorgesehen sein.

In nicht gezeigten Alternativen des Drehantriebs D könnten sogar nur eine Drehmomentstütze 12 und eine Führung 15 ausreichen, oder kann die ,Führungsstange 12 nur oder zusätzlich zur Verankerung im Boden 3 oder Deckel 1 an der Innenwand des Gehäuses 4 ausgebildet oder daran verankert sein.

In der Seitenansicht des Drehantriebs D in Fig. 3 ist der Klarheit wegen das Gehäuse 4 weggelassen, um die Zusammenarbeit zwischen den Drehmomentstützen 12 und den Führungen 15 sowie den Enden 24 der Querachse 8 und den Führungsnuten 9 zu verdeutlichen.

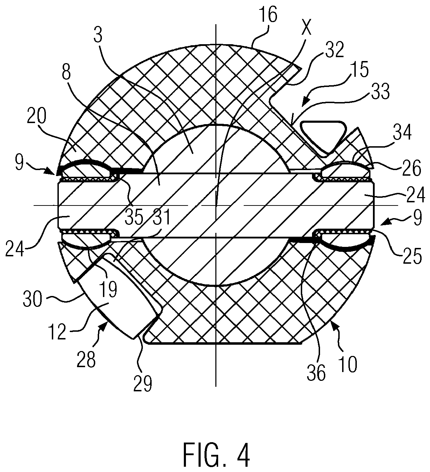

In der gezeigten Ausführungsform sind die Führungen 15 für die Drehmomentstützen 12 im Außenumfang der Kolbenschürze 16 offene, achsparallele Nuten mit einem U-förmigen Querschnitt, geraden und ebenen parallelen Flanken 32 (Fig. 4) und einem hier ebenen, tangential zur Achse X liegenden Nutgrund 33. Alternativ könnten die Führungen 15 an allen vier Seiten geschlossen sein und die Drehmomentstützen 12 allseits umfassen.

Jede Drehmomentstützen 12 ist im Hinblick auf die zu übertragenden Drehmomente bzw. Reaktionskräfte aus den Drehmomenten lastspezifisch gestaltet, um ein optimal hohes Biegewiderstandsmoment mit einem möglichst großen Wirkabstand zur Achse X zu bieten, was die Bauteilbelastungen reduziert. Im Detail hat die Drehmomentstütze 12 einen annähernd rechteckigen Außenquerschnitt mit tangential zur Achse X bzw. Welle 6 liegenden längeren Rechteckseiten 28 und dazu im Wesentlichen senkrechten und hier ebenen, kürzeren Rechteckseiten 29. Das Längenverhältnis zwischen den längeren Rechteckseiten 28 und den kürzeren Rechteckseiten 29 kann etwa 2:1 betragen. Die Drehmomentstütze 12 ist z.B. ein Steg- oder Stangenprofil-Abschnitt.

In der gezeigten Ausführungsform sind zusätzlich die längeren Rechteckseiten 28 des Außenquerschnitts bombiert (bei 30) bzw. konvex gerundet (alternativ doppeltkonisch), um das Biegewiderstandsmoment weiter zu steigern. Zwischen der zur Achse X weisenden, längeren Rechteckseite 28 und dem Nutgrund 33 der Führung 15 kann ein Zwischenabstand 31 vorgesehen sein, um bei der Drehmomentübertragung in Reibkontakt stehende Kontaktflächen zu minimieren. Auch die kürzeren Rechteckseiten 29 könnten konvex gerundet sein, und dann entsprechend die Flanken 32 der Nut konkav gerundet sein (annähernd elliptischer Querschnitt nicht gezeigt).

Der Boden 3, die Fußteile 27 und die Drehmomentstütze 12 bilden in Figur 3 z.B. ein einteiliges Gussteil, z.B. ein Feingussteil in Edelstahl.

Jede Drehmomentstütze 12 kann in Fig. 3 an der Verankerungsstelle 13 einen in einer Richtung zumindest tangential zur Achse X bzw Welle 6 verbreiterten Fußteil 27 aufweisen. Der Fußteil 27 kann in einer Schweißkonstruktion des Drehantriebs D mit dem Boden 3 verschweißt sein. Alternativ könnte die Drehmomentstütze 12 in eine Aufnahme des Bodens 3 eingesteckt und dort verschweißt sein, oder auf einen Dorn des Bodens 3 aufgesteckt und verschweißt sein. In der gezeigten Ausführungsform sind die Drehmomentstützen 12 aus Stahl ausgebildet und entweder massiv oder hohl. Der Stahl kann in etwa die gleiche Spezifikation haben wie der den Boden 3 bildende Stahl. Alternativ kann für die Drehmomentstütze 12 ein höherwertiges Stahlmaterial als das des Bodens 3 verwendet werden. Der Kolben 10 kann hingegen aus Kunststoff bestehen, beispielsweise Hochdruck-Polyamid ohne oder mit Faserverstärkung oder POM mit Verstärkung, und ist beispielsweise ein maßgenau hergestelltes Spritzguss-Formteil.

Die Fig. 2, 3 und 4 verdeutlichen im Zusammenhang mit den Fig. 5 und 6 das Zusammenwirken zwischen der Querachse 8 und den schraubengangähnlichen Führungsnuten 9 im Kolben 10.

Jede Führungsnut 9 bildet zwei sich gegenüberliegende Laufbahnen 17 und 18 für auf den Enden 24 der Querachse 8 drehbar angeordnete Laufbuchsen 26. Jede Laufbuchse 26 ist mit einem Lager 25 (einem Gleitlager gezeigt, oder einem Wälzlager, wie einem Nadellager) auf dem Ende 24 gelagert, wobei das Lager 25 drehfest auf dem Ende 24 festgelegt sein kann. Die in Fig. 4 gezeigten Lager 25 erstrecken sich bis zu Schultern 35 zwischen den Enden 24 und dem Mittelteil der Querachse 8 und weisen in diesem Bereich nach außen vortretenden Ringflansche 36 auf. Die Laufbuchse 26 ist in Axialrichtung der Querachse 8 auf das Lager 25 aufgeschoben und wird in ihrer Arbeitsposition axial durch den Formschluss zwischen einer Bombierung 34 am Umfang der Laufbuchse 26 und einem Hinterschnitt 19, 20 der Laufbahnen 17, 18 der Führungsnuten 9 axial positioniert gehalten, ohne hierfür zusätzliche Maschinenelemente montieren zu müssen.

Die Bombierung 34 der Laufbuchsen 26 ist in der gezeigten Ausführungsform kugelig, kann jedoch doppeltkonisch sein (nicht gezeigt). Der Hinterschnitt 19, 20 der Laufbahnen 17, 18 ist passend zur Bombierung 34 entweder einem Kreisbogenabschnitt folgend konkav gekrümmt oder doppeltkonisch (nicht gezeigt).

Um bei der Montage des Drehantriebs D die Laufrollen 26 aufschieben zu können, sind in jeder Führungsnut 9 im Bereich einer Laufbuchsen-Montieröffnung 21 die zur Außenseite der Kolbenschürze 16 verlaufenden Seiten des Hinterschnitts 19, 20 bogenförmig bei 22, 23 abgetragen, zweckmäßig in etwa in der Mitte zwischen den Führungsnutenden, d.h., in einem Bereich, in welchem die zu übertragenden Drehmomente ein Minimum sind. Die Abtragungen 22, 23 sind dem Außenumfang der Laufbuchsen 26 entsprechend dimensioniert, um die Laufbuchsen auf die Enden 24 aufschieben zu können. Alternativ können die Laufbuchsen 26 mit den Lagern 25 vormontiert und lose aufgeschoben oder aufgepresst werden. Im Betrieb des Drehantriebs sind die Abtragungen 22, 23 unkritisch, weil dieser Bereich von den Laufbuchsen 26 ohne Gefahr eines Abgleitens z.B. nach außen rasch überfahren werden.

Die Ausbildung einer Laufbuchsen-Montieröffnung 21 ist in den Fig. 5 und 6 angedeutet. Jede Abtragung 23, 22 reicht etwa bis zur Hälfte der Tiefe jedes Hinterschnitts 19, 20 und läuft im Wesentlichen übergangslos in den tiefsten Bereich des Hinterschnitts 19, 20 ein. Die Abtragung 22, 23 ist gemäß Fig. 6 entsprechend dem kreisförmigen Außenumfang der Laufbuchse 26 gestaltet. Optional liegen die Abtragungen 22, 23 beider Führungsnuten 9 in Bezug auf die Achse X diametral gegenüber, und beide Laufbuchsen 26 (mit oder ohne Lager 25) in derselben Stellung des gegen die Kraft der Feder 11 entsprechend verschobenen Kolbens 10 montieren zu können. Die Laufbuchsen 26 können aus Kunststoff oder einem Metall oder einer Legierung bestehen, hinsichtlich der Gleit- und Abwälz-Eigenschaften passend zum Kunststoffmaterial des Kolbens 10.

Die lastspezifische Ausbildung des Außenquerschnitts der Drehmomentstütze 12 und die dazu passenden Führungen 15 erhöhen die Präzision der Zusammenarbeit, minimieren die Flächenpressung und stellen eine stabile Übertragung der Drehmomente in den Boden 3 (oder den Deckel 1 und/oder das Gehäuse 4) sicher. Der die Laufbuchsen axial auf der Querachse 8 positionierende Formschluss zwischen der Bombierung 34 und den Hinterschnitten 19, 20 bietet den Vorteil einer reduzierten Flächenpressung, da in Kontakt stehende Flächen vergrößert sind, und vereinfacht die Montage durch Wegfall von Maschinenelementen zur Axialsicherung der Laufbuchsen 26 (mit oder ohne Lager 25).

## Patentansprüche

1. Drehantrieb (D), insbesondere für ein Scheibenventil (V), mit einem einen linear geführt verschiebbaren Kolben (10) enthaltenden, einen Deckel (1) und einen Boden (3) aufweisenden Gehäuse (4), schraubengangähnlichen Führungsnuten (9) im Kolben, einer im Boden (8) um eine Achse (X) des Drehantriebs drehbaren Welle (6) mit einer Querachse (8), die im Kolben in die Führungsnuten eingreift, und wenigstens einer im Gehäuse (4) verankerten, achsparallelen, in eine Führung (15) im Kolben (10) gleitfähig eingepassten Führungsstange (12) zum Abstützen von bei Verschieben des Kolbens von der Querachse (8) ausgeübten Drehmomenten, **dadurch gekennzeichnet, dass** die jeweilige Führungsstange (12) einen zum Abstützen der Drehmomente lastspezifisch gestalteten, annähernd rechteckigen Außenquerschnitt aufweist, der tangential zur Welle (6) längere Rechteckseiten (28) und etwa radial zur Achse kürzere Rechteckseiten (29) aufweist.

2. Drehantrieb nach Anspruch 1, **dadurch gekennzeichnet, dass** die längeren Rechteckseiten (28) des Außenquerschnitts konvex gerundet sind, vorzugsweise mit einer Krümmung (30) annähernd entsprechend der Außenumfangskrümmung des Kolbens (10), und dass die kürzeren Rechteckseiten (29) entweder gerade und zueinander parallel oder konvex gekrümmt sind.

3. Drehantrieb nach Anspruch 1, **dadurch gekennzeichnet, dass** die Führung (15) eine axiale offene Nut mit U-förmigem Querschnitt im Außenumfang des Kolbens (10) ist, die die Führungsstange (12) an drei Seiten umgreift.

4. Drehantrieb nach Anspruch 3, **dadurch gekennzeichnet, dass** zwischen dem Grund (23) der Nut und der dem Grund zugewandten längeren Rechteckseite (28) ein Zwischenabstand (31) vorgesehen ist.

5. Drehantrieb nach Anspruch 1, **dadurch gekennzeichnet, dass** der Außenquerschnitt der Drehmomentstütze (12) annähernd elliptisch ist.

6. Drehantrieb nach Anspruch 5, **dadurch gekennzeichnet, dass** die Führung (15) eine axiale offene Nut im Außenumfang des Kolbens (10) ist und der konvexen Krümmung der kürzeren Rechteckseiten (29) entsprechend konkav gekrümmt hinterschnittene Nutflanken aufweist.

7. Drehantrieb nach Anspruch 1, **dadurch gekennzeichnet, dass** die Drehmomentstütze (12) am Deckel (1) und /oder Boden (3) und/oder an der Innenwand des Gehäuses (4) verankert ist.

8. Drehantrieb nach Anspruch 1, **dadurch gekennzeichnet, dass** mindestens zwei sich bezüglich der Welle (6) in etwa diametral gegenüber liegende Drehmomentstützen (12) vorgesehen sind.

9. Drehantrieb nach Anspruch 1, **dadurch gekennzeichnet, dass** die Drehmomentstütze (12) mit dem Boden (3) oder dem Deckel (1) und/oder mit dem Gehäuse (4) ein einteiliges Gußteil bildet.

10. Drehantrieb nach Anspruch 1, **dadurch gekennzeichnet, dass** die Drehmomentstütze (12) entweder massiv oder hohl ist.

11. Drehantrieb nach Anspruch 1, **dadurch gekennzeichnet, dass** die Drehmomentstütze (12) aus Stahl besteht und am aus Stahl bestehenden Boden (1) und/oder Deckel (3) und/oder innen im Gehäuse (4) verschweißt ist.

12. Drehantrieb nach Anspruch 1, **dadurch gekennzeichnet, dass** sich die Drehmomentstütze (12) mit einem freien Ende über die Axialposition der Querachse (8) hinweg erstreckt.

13. Drehantrieb nach Anspruch 1, **dadurch gekennzeichnet, dass** die längeren Rechteckseiten (28) etwa doppelt so lang sind wie die kürzeren Rechteckseiten (29) des Außenquerschnitts.

14. Drehantrieb nach Anspruch 1, **dadurch gekennzeichnet, dass** der Kolben (10) ein Kunststoff-Formteil, vorzugsweise ein Spritzgussteil, ist.

15. Drehantrieb nach wenigstens einem der vorhergehenden Ansprüche, **dadurch gekennzeichnet, dass** gegenüber der Drehmomentstütze (12) in Umfangsrichtung versetzt bombierte Laufbuchsen (26) auf der Querachse (8) angeordnet und für je eine Laufbuchse (26) vorgesehene Laufbahnen (18, 19) in den Führungsnuten (9) der Bombierung oder Laufbuchsen (26) entsprechend hinterschnitten sind.

16. Getränkeabfüllanlage mit wenigstens einem einen Drehantrieb gemäß Anspruch 1 aufweisenden Scheibenventil.
